# EUROPÄISCHE PATENTSCHRIFT

(11) **EP 1 309 257 B1**
(45) Veröffentlichungstag und Bekanntmachung des Hinweises auf die Patenterteilung: **21.06.2006**
(21) Anmeldenummer: 01971822.0
(22) Anmeldetag: 31.07.2001
(51) Int. Cl.: A44B 18/00

(54) **VERFAHREN ZUM HERSTELLEN EINES HAFTVERSCHLUSSTEILS**
METHOD FOR PRODUCING AN ADHESIVE CLOSING ELEMENT
PROCEDE DE REALISATION D'UNE PIECE DE FERMETURE PAR ADHERENCE

(30) Priorität: 16.08.2000 DE 10039937
(43) Veröffentlichungstag der Anmeldung: 14.05.2003
(73) Patentinhaber: Gottlieb Binder GmbH & Co. KG, 71088 Holzgerlingen (DE)
(72) Erfinder: TUMA, Jan, 12681 Berlin (DE)
(74) Vertreter: Bartels, Martin Erich Arthur
(86) Internationale Anmeldenummer: PCT/EP2001/008834
(87) Internationale Veröffentlichungsnummer: WO 2002/013647

(56) Entgegenhaltungen:
- WO-A-00/50208
- WO-A-98/20767
- US-A- 6 127 018

## Beschreibung

Die Erfindung betrifft ein Verfahren zum Herstellen eines Haftverschlußteils mit den Merkmalen des Oberbegriffes des Patentanspruches 1.

Durch die WO-A-00/0053 ist ein Verfahren zur Herstellung eines Haftverschlußteils bekannt mit einer Vielzahl von einstückig mit einem Träger ausgebildeten Verhakungsmitteln in Form von endseitige Verdickungen aufweisenden Stengeln, bei dem ein formbarer Kunststoffwerkstoff in plastischem oder flüssigem Zustand dem Spalt zwischen einer Druckwalze und einer Formwalze zugeführt wird und diese derart angetrieben werden, daß der Träger im Spalt als Formgebungszone gebildet und in einer Transportrichtung gefördert wird, bei dem als formgebendes Element am Formwerkzeug ein durchgehende Hohlräume aufweisendes Sieb verwendet wird und bei dem die Verhakungsmittel dadurch gebildet werden, daß der formbare Werkstoff in den Hohlräumen des Siebes zumindest teilweise erhärtet.

An der Innenseite eines ersten formgebenden Siebes ist als zweites formgebendes Element ein inneres, zweites Sieb verwendet. Dabei ist die Größe des Querschnitts der Öffnungen des inneren zweiten Siebes etwas größer gewählt als die Querschnittsgröße der Hohlräume des ersten Siebes, so daß beim Einfüllen des Kunststoffes endseitige Verdickungen der Stengel gebildet werden. Die dabei hergestellten Stengelquerschnitte sind in der Regel rotationssymmetrisch und die Stengel selbst bilden zylindrische Elemente aus, die mit ihrem Fußteil in das Trägermaterial münden und an ihrem freien Ende mit dem Kopfteil versehen sind, das durch das zweite Sieb mit seinen formgebenden Hohlräumen gebildet wird. Aufgrund der unterschiedlichen Querschnittsgrößen zwischen Formhohlräumen des ersten Siebes für die Stengelteile und den Formhohlräumen des zweiten Siebes für die Kopfteile kommt es zu einem kantenartigen Übergang zwischen den genannten Teilen und damit in Verbindung stehenden hohen Haftkräften zumindest des Kopfteils innerhalb der Formhohlräume des zweiten Siebes mit der Folge, daß beim Entformen des Trägers mit den Verhakungsmitteln diese hohen Haftkräfte zu überwinden sind, die bei nicht genau eingestelltem Prozeßablauf zumindest teilweise sogar zum Abreißen der geformten Kopfteile führen können. Da die mit dem beschriebenen Verfahren hergestellten Kopfteile im wesentlichen gleichfalls zylindrisch und/oder mit eckigen Endabschnitten versehen ausgebildet werden, sind die Kopfteile ebenso wie die Stengelteile relativ starr ausgebildet und wenig nachgiebig, was zu Schwierigkeiten führt, wenn beispielsweise Kopfteile der gleichen Art in die jeweiligen freigelassenen Zwischenräume des Verhakungsmaterials eines anderen Verschlußteils zum Herstellen eines kompletten Verschlusses eingreifen sollen und die dahingehenden Zwischenräume durch die Starrheit der Verhakungsmittel nicht wie gewünscht für die Verhakung zunächst freigegeben werden.

Die nach demworstehend beschriebenen Verfahren hergestellten Verhakungsmittel weisen, wie bereits dargelegt, rotationssymmetrische Stengelquerschnitte auf, wobei die Stengel selbst zunächst zylindrische Elemente ausbilden. Werden die dahingehenden Stengel anschließend einem Kalanderverfahren unterzogen, bei dem eine Kalanderwalze entgegen der Wirkung einer Gegenhaltewalze auf das Verschlußmaterial drückt, werden die freien Stengelenden an ihrer Kopfseite im Querschnitt verbreitert, was die gewünschte Kopfformung für das jeweilige Verhakungsmittel unterstützt und die Stengel selbst nehmen im Querschnitt, wie in der WO 99/60880 A1 offenbart, konkave Bahnverläufe ein. Allein der dahingehend konkave Bahnverlauf wird durch ein separates Kalanderherstellverfahren erzeugt und nicht mittels des Siebherstellverfahrens nach der WO 00/00053 A1 mit den bekannten Entformungsproblemen.

Durch die WO-A-98/20767 ist ein Verfahren sowie eine Vorrichtung zur Herstellung eines Haftverschlußteiles bekannt mit einstückig mit einem Träger ausgebildeten Verhakungsmitteln. Die Verhakungsmittel werden dadurch hergestellt, daß ein thermoplastischer Kunststoff dem Spalt zwischen einer Druckwalze und einer Formwalze zugeführt wird. Dabei weist die Formwalze ein Sieb mit offenen zylindrischen Hohlräumen auf, die durch Ätzen oder mittels eines Lasers hergestellt worden sind, so daß die fertigen Verhakungsmittel allein dadurch entstehen, daß der thermoplastische Kunststoff in den offenen Hohlräumen des Siebes der Formwalze zumindest teilweise erhärtet. Die derart hergestellten Verhakungsmittel kennzeichnen sich durch ein zylindrisches Stengelteil aus, das an seinem freien Ende in ein im Querschnitt sich verbreiterndes Kopfteil als eigentliches Haken-Verschlußteil übergeht. Durch die JP-A-10248866 (entspricht US-A-6 127 018) ist ein gattungsgemäßes Verfahren zum Herstellen eines Haftverschlusses bekannt mit einer Vielzahl von einstückig mit einem Träger verbundenen und symmetrisch aufgebauten Verhakungsmitteln in Form jeweils eines mit einem Kopfteil versehenen Stengelteils, bei dem ein formbarer Werkstoff in eine Formgebungszone zwischen einem Druckwerkzeug und einem Formwerkzeug zugeführt wird und dieses derart angetrieben wird, daß der Träger in der Formgebungszone gebildet und in eine Transportrichtung gefördert wird und bei dem als formgebendes Element am Formwerkzeug Formhohträume mit jeweils gegenüberliegenden Begrenzurigswänden verwendet werden, wobei zumindest in einem Längsschnitt des jeweiligen Formhohlraumes gesehen die einander gegenüberliegenden Begrenzungswände durchgehend mit einem konvexen Bahnverlauf versehen werden.

Mit dem dahingehend bekannten Verfahren lassen sich flach in einer Ebene verlaufende Verhakungsmittel herstellen, die entlang ihrer Stirnseiten zueinander parallele Flächen aufweisen, die quer zu ihnen mit konvex verlaufenden Abschlußwänden versehen sind. Neben einem gleichförmig konvexen Bahnverlauf sind bei einer anderen Ausführungsform die genannten gegenüberliegenden Abschlußwände im Bereich des Fußteils, also an der Stelle des Überganges von Verhakungsmittel zu Träger stärker gekrümmt, denn im Bereich des jeweiligen Kopfteils. Dergestalt sind Verhakungsmittel gegeben, deren flachverlaufender Stengelteil aufgespalten in zwei Äste jeweils paarweise gegenüberliegend hakenförmige Verschlußteile ausbilden. Die einander gegenüberliegenden Hakenteile eines jeden Verhakungsmittels lassen, was die Anhaftung mit anderen verbindbaren Verschlußteilen anbelangt noch Wünsche offen.

Ausgehend von diesem Stand der Technik liegt der Erfindung die Aufgabe zugrunde, das bekannte Verfahren dahingehend weiter zu verbessern, daß ein gutes Ausformen der Verhakungsmittel nach dem Formgebungsprozeß erreicht ist, und zwar auch bei sehr hohen Herstellgeschwindigkeiten, und daß die derart hergestellten Verhakungsmittel zu gut haftenden und miteinander verbindbaren Verschlußteilen führen. Eine dahingehende Aufgabe löst ein Verfahren mit den Merkmalen des Anspruches 1.

Dadurch, daß gemäß dem kennzeichnenden Teil des Patentanspruches 1 die Krümmung des jeweiligen Bahnverlaufes in Richtung des zu formenden Kopfteils stärker ausgeführt wird, als in Richtung eines Fußteils, über das das Stengelteil mit dem Träger verbunden wird, und daß-die Formhohlräume und mithin die Verhakungsmittel als rotationssymmetrische Teile in Form eines Hyperboloids ausgebildet werden, ist ein Krümmungsverlauf und Übergang zwischen den Querschnittsformen von Stengelteil und Kopfteil für ein Verhakungsmittel des Trägers erreicht, der im wesentlichen zu einem hemmfreien Entformungsprozeß führt, ohne daß dabei die Gefahr besteht, daß über scharfkantige Formübergänge es zu einem Abreißen der Kopfteile von ihrem jeweils zugeordneten Stengelteil kommen kann. Auch ist der dahingehende Krümmungsverlauf günstig für die Herstellung der gewünschten Verhakungsmittelgeometrien. Aufgrund des rotationssymmetrischen Hyperboloidaufbaus sind darüber hinaus Kopfteile bildbar, die zu ihrem äußeren Umgebungsrand hin in ihrer Höhe derart abnehmen, daß eine Art Verhakungslippe gebildet wird mit der Folge, daß die Kopfteile randseitig elastisch sehr nachgiebig sind und ein problemloses Verhaken untereinander oder mit einem zugeordneten Schlaufenmaterial erreicht ist.

Bei dem dahingehenden Eingriff von Verhakungsmitteln der einen Art in die Zwischenräume von Verhakungsmitteln der anderen oder der gleichen Art .. werden die Kopfteillippen elastisch beiseite geschoben, um nach dem Ineingriffbringen unmittelbar ihre ursprüngliche Lage wieder einzunehmen und den zunächst freigegebenen Zwischenraum wieder zu versperren. Auf diese Art ünd Weise ist ein sehr günstiges Verschlußverhalten zwischen den beiden einen Verschluß bildenden Haftverschlußteilen möglich.

Vorzugsweise ist dabei vorgesehen, daß von der Längsrichtung des Stengelteils aus in Richtung des Kopfteils gesehen der jeweilige Bahnverlauf mit seiner stärkeren Krümmung oberhalb der Mitte, vorzugsweise im oberen Drittel beginnend vorgesehen wird.

Bei einer besonders bevorzugten Ausführungsform des erfindungsgemäßen Verfahrens münden ein Teil der Längsschnitte mit ihren konvexen Bahnveläufen in Ecken der Begrenzungswände derart ein, daß der Querschnitt des Stengelteils und/oder des Kopfteils als Vieleck, insbesondere als 6-Eck, ausgebildet wird. Aufgrund der genannten Eckgestaltung kommt es insbesondere im Bereich des Kopfteils zu starken Umlenkungen am Außenumfangsbereich, was es den Verhakungsmitteln, auch in Form eines Flausches eines anderen Verschlußteils, das mit dem erstgenannten Verschlußteil einen Verschluß bildet, erleichtert, die wirksame Verhakung vorzunehmen. Durch die angesprochene 6- oder Mehreckform läßt sich derart insbesondere die Schälfestigkeit des Verschusses deutlich erhöhen.

Bei einer weiteren bevorzugten Ausführungsform des erfindungsgemäßen Verfahrens wird der jeweilige Formhohlraum als Teil eines Formsiebes oder Formgitters des Formwerkzeuges ausgebildet. Auf diese Art und Weise ist es möglich, mit nur einer Art eines Siebes oder Gitters die gesamte Struktur des Verhakungsmittels herzustellen.

Es kann jedoch auch bei einem anders gearteten Verfahren vorgesehen sein, daß jedem Teil des Verhakungsmittels, vorzugsweise sowohl dem Kopfteil als auch dem Stengelteil, ein eigenes Formsieb oder Formgitter mit unterschiedlichen Querschnitten zugeordnet wird. Auf diese Art und Weise lassen sich eine Vielzahl an Gestaltungsmöglichkeiten bei der Herstellung der Verhakungsmittel erreichen.
Da die herzustellenden Formhohlräume komplex aufbauend sind, hat es sich in Fortführung des erfindungsgemäßen Verfahrens als besonders vorteilhaft erwiesen, diese mit ihren Bahnverläufen über ein galvanisches Beschichtungsverfahren oder mittels eines Lasers herzustellen.

Bei einer weiteren bevorzugten Ausführungsform des erfindungsgemäßen Verfahrens wird das Formsieb oder das Formgitter jeweils als Mantelteil ausgebildet, das um das Formgebungswerkzeug in Form eines Walzenkörpers herumgelegt und mit diesem verbunden wird. Somit läßt sich gegebenenfalls das Formsieb oder das Formgitter als Verschleißteil leicht austauschen und das walzenartige Formgebungswerkzeug an sich bleibt für den weiteren Fertigungsprozeß erhalten.

Mit dem erfindungsgemäßen Verfahren lassen sich Verhakungsmittel herstellen, die geometrisch sehr klein aufbauen, so daß die Realisierung von Mikro-Haftverschlüssen ohne weiteres möglich ist. Ferner läßt sich die Dichte der Verhakungsmittel pro cm² Trägermaterial sehr stark erhöhen und mithin die Haftkraft zwischen Haftverschlußteilen eines Verschlusses. Dabei hat es sich als besonders vorteilhaft erwiesen, die Formhohlräume und mithin die Verhakungsmittel als rotationssymmetrische Teile, insbesondere in Form von Hyperboloiden, auszubilden.

Im folgenden wird das erfindungsgemäße Verfahren anhand einer Ausführungsform näher erläutert. Es zeigen in prinzipieller und nicht maßstäblicher Darstellung die
- Fig.1: eine stark schematisch vereinfacht und teils geschnitten gezeichnete Seitenansicht einer Vorrichtung zur Durchführung des erfindungsgemäßen Verfahrens;
- Fig.2: in stark vergrößerter Darstellung einen Längsschnitt durch einen Formhohlraum gemäß der Darstellung nach der Fig.1;
- Fig.3: ein Verhakungsmittel, wie es mit dem Formhohlraum nach der Fig.2 herstellbar ist;
- Fig.4: eine Draufsicht auf das mit der Vorrichtung nach der Fig.1 hergestellte Trägerbandmaterial mit mehreren Verhakungsmitteln gemäß der Darstellung nach der Fig.3.

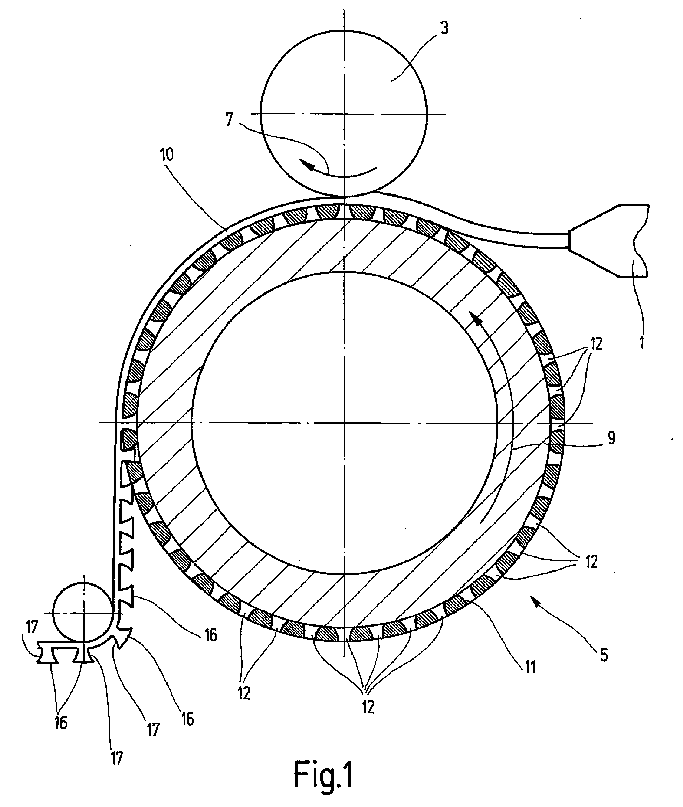

Fig. 1 zeigt in schematischer Darstellung Teile einer Vorrichtung zum Durchführen des erfindungsgemäßen Verfahrens mit einem Extruderkopf 1 als Zuführeinrichtung für in plastischem oder flüssigem Zustand befindlichen, insbesondere thermoplastischen Kunststoff, der als ein Band, dessen Breite derjenigen des herzustellenden Haftverschlußteils entspricht, dem Spalt zwischen einem Druckwerkzeug und einem Formwerkzeug zugeführt wird. Als Druckwerkzeug ist eine Druckwalze 3 vorgesehen. Bei dem Formwerkzeug handelt es sich um eine als Ganzes mit 5 bezeichnete Formwalze. Beide Walzen sind in den in Fig.1 mit Bogenpfeilen 7 und 9 angegebenen Drehrichtungen angetrieben, so daß zwischen ihnen ein Förderspalt gebildet wird, durch den das Kunststoffband in Transportrichtung gefördert wird, während gleichzeitig im Spalt als Formgebungszone das Kunststoffband zum Träger 10 des Haftverschlußteils geformt wird und der Träger 10 an der an der Formwalze 5 anliegenden Seite durch die formgebenden Elemente der Formwalze 5 die zur Bildung von Verhakungsmitteln erforderliche Formgebung erhält.

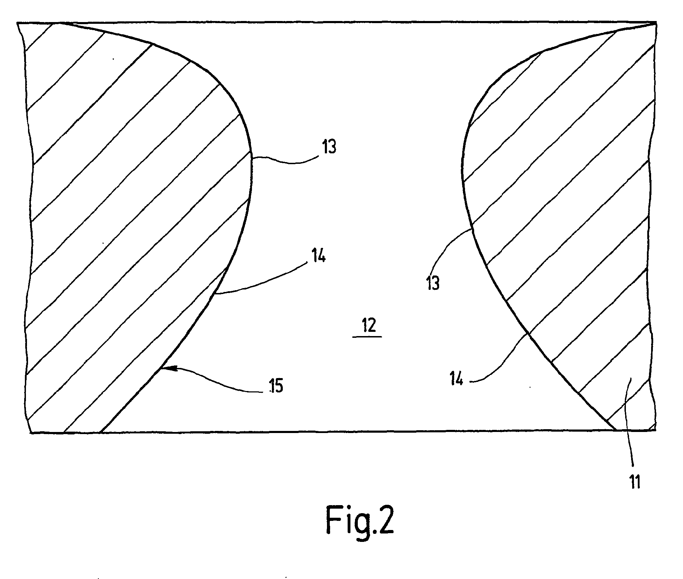

Zu diesem Zweck weist die Formwalze 5 am Umfang ein Sieb 11 auf mit einzelnen Formhohlräumen 12. Ein dahingehender Formhohlraum 12 ist beispielhaft in der Fig.2 vergrößert dargestellt wiedergegeben. Des weiteren sind die Formhohlräume 12, was nicht näher dargestellt ist, über die Formwalze 5 mit ihrem Sieb 11 außenumfangsseitig regelmäßig verteilt, wobei die Verteilung und die Anzahl frei wählbar sind. Die Fig.2 gibt einen Längsschnitt wieder des jeweils eingesetzten Formhohlraumes 12, wobei die im Längsschnitt gegenüberliegenden Begrenzungswände 13 durchgehend mit einem konvexen Bahnverlauf 14 versehen sind. Es versteht sich, daß die genannten beiden Begrenzungswände 13 im Hinblick auf den rotationssymmetrischen Aufbau des Formhohlraums 12 dem Grunde nach Teil einer abschließenden Formgebungswand 15 sind, die durch das Siebmaterial 11 der Formwalze 5 begrenzt wird. Mit den dahingehenden Formhohlräumen 12 ist es möglich, Verhakungsmittel herzustellen in Form jeweils eines mit einem Kopfteil 16 versehenen Stengelteils 17.

Wie die Fig.2 des weiteren zeigt, ist dabei die Krümmung des jeweiligen Bahnverlaufs 14 in Richtung des zu formenden Kopfteils 16 stärker ausgeführt als in Richtung eines Fußteils 18, über das das Stengelteil 17 mit dem Träger 10 verbunden ist. Als besonders vorteilhaft hat sich dabei erwiesen, wenn man von der Längsrichtung des Stengelteils 17 aus in Richtung des Kopfteils 16 gesehen den Bahnverlauf 14 mit seiner stärkeren Krümmung oberhalb der Mitte, vorzugsweise im oberen Drittel beginnend, vorsieht.

Zum Erhalt der angesprochenen Formhohlräume 12 mit ihrem rotationssymmetrischen Aufbau in Form eines Hyperboloids haben sich galvanische Beschichtungsverfahren erwiesen, bei dem zunächst ein zylindrischer Formhohlraum (nicht dargestellt) derart mit einem Beschichtungswerkstoff beschichtet wird, bis sich der konvexe Bahnverlauf 14 einstellt. Ferner ließe sich gegebenenfalls auch über ein Laserverfahren der konvexe Bahnverlauf 14 aus einem Sieb- oder Gitter-Vollmaterial erzeugen.

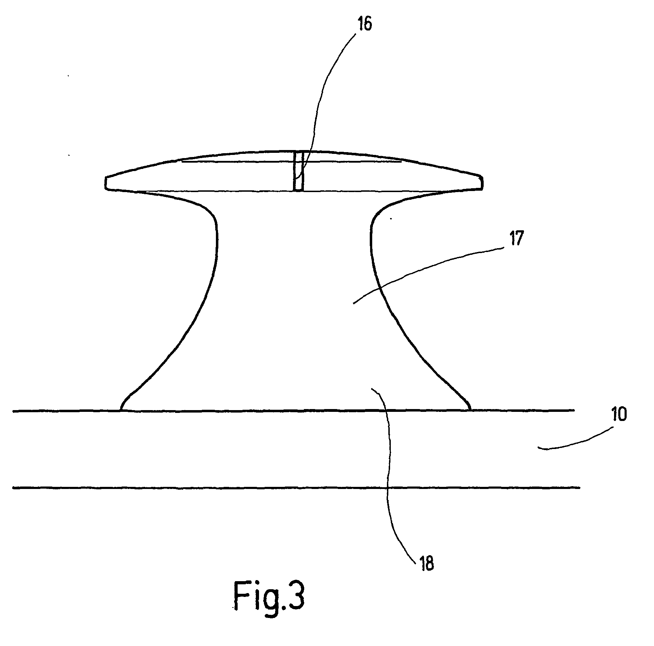

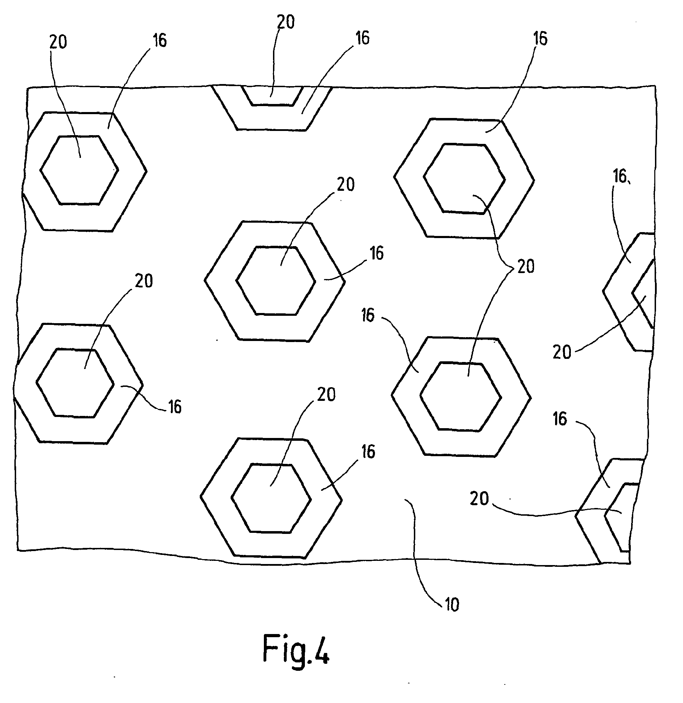

Das in der Fig.3 dargestellte Verhakungsmittel läßt sich mit dem vorstehend beschriebenen Verfahren erhalten. Der symmetrische Aufbau ergibt sich unmittelbar durch die Herstellung in einem Formhohlraum 12 nach der Fig.2. Das dahingehende Verhakungsmittel kann geometrisch sehr klein aufbauend sein, beispielsweise nur eine Höhe von 0,4 mm aufweisen, mit einer Breite des Verschlußkopfes in der Größenordnung von 0,6 mm. Der Querschnitt des Stengelteils 17 beträgt bei dieser Ausführungsform ca. 0,25 mm. Ferner läßt sich gemäß der Darstellung nach der Fig.4 eine Vielzahl solcher Verhakungsmittel auf dem Träger 10 anordnen. Die Kopfform des Kopfteils 16 braucht nicht weiter nachbearbeitet zu werden; es kann jedoch bei bestimmten Verfahren vorgesehen sein, die Köpfe der Verhakungsmittel einem Kalanderverfahren od. dgl. zu unterwerfen und dabei zu kalandrieren. Ferner kann es möglich sein, in die Außenkontur des an sich geschlossenen, ringförmigen Kopfteils 16 Schnitte einzubringen, um derart eine Vielzahl von Verhakungen entlang des Kopfteils 16 zu erhalten. Die in der Fig.3 und 4 gezeigten Verhakungsmittel können insbesondere von ihrem Kopfteil 16 her auch ein anderes Aussehen haben, beispielsweise mit Kopfgeometrien versehen sein, wie dies in der PCT/WO 00/00053 bereits gezeigt worden ist. Sofern die Gefahr besteht, daß die randseitigen freien Enden der im Querschnitt im vorliegenden Fall 6-eckförmigen Kopfteile 16 beim Ausformen aus der Siebwalze 11 sich ungewollt hochstellen sollten, kann über eine Kalanderwalze ein Nachkalandrieren der Kopfteile 16 von oben her erfolgen, so daß diese dann eine Gestalt nach der Fig.3 einnehmen mit der Maßgabe, daß der konvex hochgewölbte Mittenbereich 20 des jeweiligen Kopfteils 16 sich nach innen in Richtung auf das Stengelteil 17 konkav (nicht dargestellt) einwölbt. Die in der Fig.4 von oben her dargestellten Mittenbereiche 20, die von der 6-eckförmigen Randform des Kopfteils 16 her umfaßt sind, würden sich also in Blickrichtung auf die Fig.4 gesehen in die Zeichenebene hinein wölben und derart entgegen der Darstellung nach der Fig.3 eine Vertiefung ausbilden.

Als formbare Werkstoffe für das Durchführen des erfindungsgemäßen Verfahrens können auch biologisch abbaubare Werkstoffe (BAW) in Frage komen, wobei dahingehende Werkstoffe auch auf der Basis nachwachsender oder petrochemischer Rohstoffe oder aus Kombinationen beider hergestellt werden können.

## Patentansprüche

1. Verfahren zum Herstellen eines Haftverschlußteils mit einer Vielzahl von einstückig mit einem Träger (10) verbundenen und symmetrisch aufgebauten Verhakungsmitteln in Form jeweils eines mit einem Kopf teil (16) versehenen Stengelteils (17), bei dem ein formbarer Werkstoff in eine Formgebungszone zwischen einem Druckwerkzeug (3) und einem Formwerkzeug (5) zugeführt wird und diese derart angetrieben werden, daß der Träger (10) in der Formgebungszone gebildet und in eine Transportrichtung gefördert wird und bei dem als formgebendes Element am Formwerkzeug (5) Formhohlräume (12) mit jeweils gegenüberliegenden Begrenzungswänden (13) verwendet werden, wobei zumindest in einem Längsschnitt des jeweiligen Formhohlraumes (12) gesehen die einander gegenüberliegenden Begrenzungswände (13) durchgehend mit einem konvexen Bahnverlauf (14) versehen werden, **dadurch gekennzeichnet, daß** die Krümmung des jeweiligen Bahnverlaufs (14) in Richtung des zu formenden Kopfteils (16) stärker ausgeführt wird als in Richtung eines Fußteils (18), über das das Stengelteil (17) mit dem Träger (10) verbunden wird, und daß die Formhohlräume (12) und mithin die Verhakungsmittel als rotationssymmetrische Teile in Form eines Hyperboloids ausgebildet werden.

2. Verfahren nach Anspruch 1, **dadurch gekennzeichnet, daß** von der Längsrichtung des Stengelteils (12) aus in Richtung des Kopfteils (16) gesehen der jeweilige Bahnverlauf (14) mit seiner stärkeren Krümmung oberhalb der Mitte, vorzugsweise im oberen Drittel beginnend, vorgesehen wird.

3. Verfahren nach Anspruch 1 oder 2, **dadurch gekennzeichnet, daß** ein Teil der Längsschnitte mit ihren konvexen Bahnverläufen in Ecken der Begrenzungswände (13) derart münden, daß der Querschnitt des Stengelteils (17) und/oder des Kopfteils (16) als Vieleck, insbesondere als 6-Eck, ausgebildet wird.

4. Verfahren nach einem der Ansprüche 1 bis 3, **dadurch gekennzeichnet, daß** der jeweilige Formhohlraum (12) als Teil eines Formsiebes (11) oder eines Formgitters des Formwerkzeuges (5) ausgebildet wird.

5. Verfahren nach Anspruch 4, **dadurch gekennzeichnet, daß** jedem Teil des Verhakungsmittels, vorzugsweise dem Kopfteil (16) und dem Stengelteil (17), ein eigenes Formsieb (11) oder Formgitter mit unterschiedlichen Querschnitten zugeordnet wird.

6. Verfahren nach Anspruch 4 oder 5, **dadurch gekennzeichnet, daß** das Formsieb (11) oder das Formgitter jeweils als Mantelteil ausgebildet wird, das um das Formgebungswerkzeug (5) in Form eines Walzenkörpers herumgelegt und mit diesem verbunden wird.

7. Verfahren nach einem der Ansprüche 1 bis 6, **dadurch gekennzeichnet, daß** die Formhohlräume (12) mit ihren Bahnverläufen (14) mit einem galvanischen Beschichtungsverfahren oder mittels Lasereinsatz hergestellt werden.

8. Verfahren nach einem der Ansprüche 1 bis 7, **dadurch gekennzeichnet, daß** die Größe der Formhohlräume (12) derart gewählt wird, daß die Höhe und/oder die Breite der Verhakungsmittel zwischen 0,05 mm und 1 cm beträgt und daß bis zu 500 Verhakungsmittel pro cm² des Trägers (10) vorgesehen werden.

## Claims

1. Method for producing an adhesive closure part with a multitude of hook means in the form of a stem part (17) equipped with a head part (16) connected with a substrate (10) and symmetrically constructed to form a single piece, whereby a formable material is inserted into a forming zone between a pressure tool (3) and a forming tool (5), and these are driven in such a way that the substrate (10) is created in the forming zone and conveyed in a direction of transport, and whereby hollow form spaces (12) with opposing limiting walls (13) are used as the forming element on the forming tool (5), whereby the opposing limiting walls (13) are continuously equipped with a convex dimension (14) at least when viewed along a longitudinal cross-section of the relevant hollow form space (12), **characterised in that** the arc of the relevant dimension (14) becomes stronger in the direction of the head part (16) that is to be formed than in the direction of a foot part (18), and connected with the substrate (10) by means of the stem part (17), and **in that** the hollow form spaces (12), and therefore also the hook means, are created as rotation symmetrical parts in the form of a hyperboloid.

2. Method according to Claim 1, **characterised in that** the relevant dimension (14) with its stronger arc is envisaged above the centre, preferably in the upper third, when viewed in a longitudinal direction of the stem part (12) in the direction of the head part (16).

3. Method according to Claim 1 or 2, **characterised in that** a part of the longitudinal cross-sections opens out into the corners of the limiting walls (13) with their convex dimensions in such a way that the cross-section of the stem part (17) and/or the head part (16) is formed as a multigon, especially a hexagon.

4. Method according to one of the Claims 1 to 3, **characterised in that** the relevant hollow form space (12) is created as part of the form sieve (11) or a form grid of the forming tool (5).

5. Method according to Claim 4, **characterised in that** each part of the hook means, preferably the head part (16) and the stem part (17), are equipped with their own form sieve (11) or form grid with different cross-sections.

6. Method according to Claim 4 or 5, **characterised in that** the form sieve (11) or the form grid are each created as a sleeve component which is wrapped around the forming tool (5) in the form of a cylinder body and connected with the same.

7. Method according to one of the Claims 1 to 6, **characterised in that** the hollow form spaces (12) with their dimensions (14) are produced by means of a galvanic coating process of by means of a laser.

8. Method according to one of the Claims 1 to 7, **characterised in that** the size of the hollow form space (12) is chosen in such a way that the height and/or the width of the hook means are between 0.05 mm and 1 cm, and that up to 500 hook means per cm² of substrate (10) are envisaged.

## Revendications

1. Procédé de production d'une partie de fermeture auto-agrippante ayant une pluralité de moyens d'accrochage reliés d'une pièce à un support (10) et constitués de façon symétrique sous la forme de respectivement une partie (17) de tige munie d'une partie (16) de tête, dans lequel on envoie un matériau déformable dans une zone de façonnage entre un outil (3) d'application d'une pression et un outil (5) de mise en forme et on les fait fonctionner de façon à former le support (10) dans la zone de façonnage et à le transporter dans une direction de transport, et dans lequel on utilise comme élément donnant la forme sur l'outil (5) de mise en forme des cavités (12) de mise en forme ayant des parois (13) de démarcation respectivement opposées, dans lequel au moins, tel que vu dans une coupe longitudinale de la cavité (12) de mise en forme, les parois (13) de démarcation opposées l'une à l'autre sont munies de façon continue d'un tracé (14) convexe, **caractérisé en ce que** la courbure du tracé (14) est plus grande en direction de la partie (16) de tête à former qu'en direction d'une partie (18) de pied par laquelle la partie (17) de tige est reliée au support (10), et **en ce que** les cavités (12) de mise en forme et par conséquent les moyens d'accrochage sont constitués de parties de révolution ayant la forme d'hyperboloïdes.

2. Procédé suivant la revendication 1,
**caractérisé en ce que**, tel que vu en partant de la direction longitudinale de la partie (12) de tige en direction de la partie (16) de tête, le tracé (14) est prévu de façon que sa courbure la plus grande commence au-dessus du milieu, de préférence dans le tiers supérieur.

3. Procédé suivant la revendication 1 ou 2, **caractérisé en ce qu'**une partie des coupes longitudinales ayant des tracés convexes débouche dans des coins des parois (13) de démarcation, de sorte que la section transversale de la partie (17) de tige et/ou de la partie (16) de tête sont constituées sous la forme d'un polygone, notamment d'un hexagone.

4. Procédé suivant l'une des revendications 1 à 3, **caractérisé en ce que** la cavité (12) respective de mise en forme est constituée sous la forme d'un crible (11) ou d'un réseau de l'outil (5) de mise en forme.

5. Procédé suivant la revendication 4,
**caractérisé en ce qu'**à chaque partie de l'agent d'accrochage, de préférence à la partie (16) de tête et à la partie (17) de tige, est associé son propre crible (11) ou réseau ayant des sections transversales différentes.

6. Procédé suivant la revendication 4 ou 5, **caractérisé en ce que** le crible (11) ou le réseau est constitué respectivement sous la forme d'une partie d'enveloppe qui est mise autour de l'outil (5) de façonnage sous la forme d'un corps de rouleau et est assemblée à celui-ci.

7. Procédé suivant l'une des revendications 1 à 6, **caractérisé en ce que** les cavités (12) de mise en forme avec leurs tracés (14) sont produites par un procédé de revêtement galvanique ou au moyen d'un laser.

8. Procédé suivant l'une des revendications 1 à 7, **caractérisé en ce que** la dimension des cavités (12) est telle que la hauteur et/ou la largeur du moyen d'accrochage est comprise entre 0,05 mm et 1 cm et **en ce qu'**il est prévu jusqu'à 500 moyens d'accrochage par cm² du support (10).
